# EUROPÄISCHE PATENTANMELDUNG

(11) **EP 1 610 333 A2**
(43) Veröffentlichungstag der Anmeldung: **28.12.2005**
(21) Anmeldenummer: 05090182.6
(22) Anmeldetag: 22.06.2005
(51) Int. Cl.: G11B 33/04

(54) **Verpackungseinheit mit Datenträger**

(30) Priorität: 23.06.2004 DE 102004030379; 31.08.2004 DE 102004042448; 27.10.2004 DE 102004052294
(71) Anmelder: DOCdata Germany Berlin Optical Disc GmbH, 13344 Berlin (DE)
(72) Erfinder: Grabinski, Michael, Gustav-Meyer-Allee 25, 13355 Berlin (DE); Weiss, Volker, 13355 Berlin (DE)
(74) Vertreter: Jungblut, Bernhard Jakob

(57) **Zusammenfassung**

Die Erfindung betrifft eine Verpackungseinheit mit einem scheibenförmigen Datenträger (1) sowie einer Umverpackung (2) hierfür, wobei die Umverpackung (2) aus zwei flächigen Hüllbauteilen (3), welche zumindest über einen Teilbereich ihres Umfangrandes miteinander verbunden sind und einen Taschenbereich (4) zur Aufnahme des Datenträgers (1) bilden, aufgebaut ist. Sie ist dadurch gekennzeichnet, dass die Hüllbauteile (3) in, bezogen auf den Taschenbereich (4), einander gegenüberliegenden Verbindungsbereichen (5), welche ausserhalb des Taschenbereiches (4) angeordnet sind, flächig, optional laschenfrei, miteinander verbunden sind.

## Beschreibung

### Gebiet der Erfindung.

Die Erfindung betrifft eine Verpackungseinheit mit einem scheibenförmigen Datenträger sowie einer Umverpackung hierfür, wobei die Umverpackung aus zwei flächigen Hüllbauteilen, welche zumindest über einen Teilbereich ihres Umfangrandes miteinander verbunden sind und einen Taschenbereich zur Aufnahme des Datenträgers bilden, aufgebaut ist. Die Erfindung betrifft des Weiteren eine Umverpackung für eine solche Verpackungseinheit, Verwendungen einer solchen Verpackungseinheit sowie ein Verfahren zur Herstellung einer solchen Umverpackung.

### Stand der Technik und Hintergrund der Erfindung.

Eine Verpackungseinheit des eingangs genannten Aufbaus ist aus der Praxis bekannt. Hierbei handelt es sich um im Wesentlichen quadratische Umverpackungen aus Papier oder Pappe, wobei entlang drei Kanten die Umverpackung verbunden ist. Entlang der vierten Kante ist eine Öffnung eingerichtet, durch welche der Datenträger in die Umverpackung einführbar ist. Die Öffnung kann beispielsweise durch eine umklappbare und verklebbare Lasche verschlossen werden. Solche Umverpackungen dienen dem Schutz des Datenträgers beispielsweise vor mechanischer Beschädigung und erfüllen ansonsten keine weiteren Funktionen. Typischerweise erfolgt die Verbindung der drei Kanten durch Umlegen und Verkleben von Laschen. Dies ist produktionstechnisch aufwändig.

Aus der Praxis sind weiterhin geformte CDs bekannt, welche eine Lasche oder einen Teilbereich aufweisen, welcher abgetrennt werden kann. Die optischen Informationen der CD sind auch ohne die abgetrennte Lasche maschinenlesbar. Eine solche geformte CD lässt sich als Eintrittskarte verwenden, wobei eine Entwertung durch Abtrennung der Lasche erfolgt. Die insofern bekannte CD hat neben der Zurverfügungstellung der darauf gespeicherten Daten und Informationen als weitere Funktion die Funktion einer Eintrittskarte. Nachteilig hierbei ist, dass die CD unmittelbar selbst gehandhabt werden muss, insbesondere zum Abtrennen der Lasche. Dies kann zu Kratzern auf der maschinenlesbaren Oberfläche der CD führen, wodurch die CD im schlimmsten Fall nicht mehr lesbar ist. Zudem neigen geformte CDs dazu, aufgrund von Unwüchten schlecht oder gar nicht in schnelllaufenden Laufwerken zu funktionieren. Dies gilt umso mehr, als dass bei Abtrennung der Lasche die Bruchlinie nicht immer exakt entlang einer vorgegebenen Solllinie verläuft.

Generell ist es wünschenswert, Datenträger bzw. Datenträger enthaltende Verpackungseinheiten multifunktionell zu gestalten. Zudem sollte eine Verpackungseinheit in der Herstellung einfach sein, zumal es sich um Massenprodukte handelt.

### Technisches Problem der Erfindung.

Der Erfindung liegt daher das technische Problem zugrunde, eine Verpackungseinheit mit einem Datenträger anzugeben, welche einfach in der Herstellung ist und zudem weitere Funktionen, wie beispielsweise als Eintrittskarte, erfüllen kann.

Grundzüge der Erfindung und bevorzugte Ausführungsformen.

Zur Lösung dieses technischen Problems lehrt die Erfindung, dass die Hüllbauteile in, bezogen auf den Taschenbereich, einander gegenüberliegenden Verbindungsbereichen, welche ausserhalb des Taschenbereiches angeordnet sind, flächig, optional laschenfrei, miteinander verbunden sind. Die Hüllbauteile einer Verpackungseinheit bzw. Umverpackung können somit den gleichen Umriss haben bzw. deckungsgleich sein. Beide Hüllbauteile können über eine Knickkante miteinander verbunden sein, wodurch die beiden Hüllbauteile dann einstückig hergestellt werden. Die Verbindung bzw. Verklebung erfolgt dabei an zueinander zugewandten Hauptflächen der Hüllbauteile. Laschen an einem der Hüllbauteile und das Umlegen und Verkleben derselben an zumindest 2, meist 3 Kanten, werden entbehrlich.

In Hinblick auf die Umfangsform der Hüllbauteile sind verschiedene Alternativen möglich.

Einerseits kann vorgesehen sein, dass die Hüllbauteile jeweils eine Längsachse und eine Querachse aufweisen, wobei das Verhältnis der Längserstreckung zur der Quererstreckung von 1,1:1,0 bis 5:1 beträgt, und dass die Hüllbauteile in Verbindungsbereichen, welche an den einander gegenüberliegenden Enden der Längserstreckung angeordnet sind, flächig miteinander verbunden sind. Mit anderen Worten ausgedrückt, die Umverpackung kann im einfachsten Fall eine rechteckige, jedoch nicht quadratische Grundform aufweisen. Demgegenüber kann dann der Taschenbereich für einen (runden) Datenträger typischerweise im Wesentlichen quadratisch sein, während in den darüber hinausgehenden Verbindungsbereichen (im Bereich der Enden der Längsachse) die beiden Hüllbauteile flächig miteinander verbunden sind.

Grundsätzlich ist aber auch jede andere Umfangsform möglich, solange zwei zueinander orthogonale Achsen in den Ebenen der Hüllbauteile existieren, deren Längserstreckungen, begrenzt durch einander gegenüberliegende Ränder des Hüllbauteiles, unterschiedlich sind. Die längere Achse ist dann die Längsachse und die kürzere Achsen ist dann die Querachse. So lassen sich insbesondere auch "geshapte" Umverpackungen gestalten, i.e. die Form folgt einem Motiv, beispielsweise dem Umriss eines Kfz, eines Tieres, usw..

Schließlich ist aber auch eine im wesentlichen quadratische Form der Hüllbauteile möglich, wobei der Taschenbereich dann optional im wesentlichen eine rechteckige Form mit ungleichen Kantenlängen aufweist.

Aber auch andere Umfangsformen mit gleich langen Längs- und Querachsen sind möglich, wie beispielsweise die Kreisform, Polyederform, etc.

Mit der Erfindung wird insbesondere eine sehr einfache Herstellung der Umverpackung erreicht, da jedenfalls an den Kanten der Verbindungsbereiche keine aufwendigen Verbindungsmaßnahmen, wie Umlegen von Laschen, erforderlich sind. Die beiden Hüllbauteile können insbesondere gleiche Abmessungen bzw. Umfangsform, jedenfalls in den Verbindungsbereichen, aufweisen. Beide Hüllbauteile sind bei identischer Form sogar mit einem einzigen Werkzeug, beispielsweise einem Stanzwerkzeug, herstellbar. Die beiden Hüllbauteile müssen bei deckungsgleichen Verbindungsbereichen lediglich aufeinander gelegt und beispielsweise miteinander verklebt werden. Zudem kann die Verpackungseinheit in einem Zug zusammen mit der Verbindung der Verbindungsbereiche hergestellt werden, da der einzubringende Datenträger bereits vor dem Verbinden auf einem Hüllbauteil, nämlich im Taschenbereich, positioniert sein kann.

Als Datenträger kommen grundsätzlich beliebige scheibenförmige Datenträger, wie CD, magnetische Datenträger und dergleichen, in Frage. Es ist aber auch möglich, dass die Verpackungseinheit keinen maschinenlesbaren Datenträger, sondern ein Substitut hierfür enthält. Bei einem Substitut handelt es sich um einen scheibenförmigen Gegenstand mit den Abmessungen des zugehörigen Datenträgers, wobei dieser Gegenstand jedoch nicht die maschinenlesbaren Informationen des Datenträgers enthält. In der Regel werden im wesentlichen personenlesbare Informationen beispielsweise auf ein Substitut aufgedruckt sein; allenfalls ein maschinenlesbarer Code, beispielsweise Barcode, mit welchem eine maschinenlesbare Zuordnung von Substitut und Datenträger zwecks Austausch des Substituts gegen einen zutreffenden Datenträger erfolgt, kann vorgesehen sein. Ein solches Substitut kann dann von einer Bedienperson gegen einen zugehörigen Datenträger eingetauscht und in die Umverpackung eingebracht werden, entweder durch Lesen der personenlesbaren Informationen und manuellem Heraussuchen des zutreffenden zugeordneten Datenträgers oder durch maschinelles Einlesen des Codes und zumindest halbautomatischen Heraussuchen des Datenträgers. Der Einsatz eines Substituts wird sich beispielsweise bei hochwertigen Datenträgern empfehlen, da der Einsatz eines Substituts und Austausch desselben gegen den Datenträger beispielsweise an einer Kasse beste Gewähr gegen Diebstahl der Datenträger bietet. In anderen Fällen kann es aus Marketingsicht wünschenswert sein, dass eine Person, welche eine Verpackungseinheit mit einem Substitut erhält, zum Austausch eine Geschäftsstelle aufsuchen und dort mit Bedienpersonen Kontakt aufnehmen muss.

Die Verbindungsbereiche sind vorteilhafterweise miteinander flächig verklebt. Hierfür kommen beispielsweise handelsübliche thermoplastische Klebstoffe in Frage.

In oder an einem Verbindungsbereich können Mittel zur Befestigung der Umverpackung an einem Aufhängungselement eingerichtet sein. Im einfachsten Fall handelt es sich bei diesen Mitteln um ein ausgestanztes Loch, ggf. mit Hohlniete zur Verstärkung versehen, durch welches als Aufhängungselement ein Hängeband oder dergleichen durchgezogen wird. Eine solche Verpackungseinheit bzw. Umverpackung lässt sich dann von einer Person beispielsweise um den Hals gehängt tragen und kann so leicht der Überprüfung beispielsweise einer Zugangsberechtigung, welche auf der Umverpackung aufgedruckt ist, dienen. Alternativ kann es sich bei dem Mittel zur Befestigung auch um eine Niet-, Schweiss- oder Klebverbindung handeln, welche die Umverpackung mit beispielsweise einer Krokodilklammer als Aufhängungselement verbindet.

In einer bevorzugten Ausführungsform ist an einer Kante, beispielsweise einer zur Längsachse parallel verlaufenden Kante, zumindest eines Hüllbauteils eine Lasche angebracht. Diese kann entlang der Kante umlegbar und mit dem gegenüberliegenden Hüllbauteil verbindbar, beispielsweise außenseitig des gegenüberliegenden Hüllbauteils verklebbar, sein. Mittels der Lasche kann dann der Taschenbereich sicher verschlossen und gegen ein Herausfallen des Datenträgers verschlossen sein. Zweckmäßigerweise wird hier zum Verkleben ein Adhäsionsklebstoff verwendet, welcher per Hand leicht wieder zu öffnen ist und zudem auch einen erneuten Verschluss erlaubt.

In einer besonderen Ausführungsform der Erfindung ist eine abtrennbare Lasche vorgesehen. Hierbei ist die Laschen dann mit dem sie tragenden Hüllbauteil beispielsweise über eine Perforation verbunden. Dann kann die Verpackungseinheit bzw. die Umverpackung wie eine Eintrittskarte verwendet werden, wobei eine Entwertung durch Abtrennung der Lasche erfolgt.

Bevorzugterweise beträgt das Verhältnis der Längserstreckung zur Quererstreckung 1,1:1 bis 2:1. Das Verhältnis der Flächen der Verbindungsbereiche zur Fläche des Taschenbereiches kann 10:1 bis 2:1, insbesondere 1:3 bis 1:1, betragen. Man erhält dann Verpackungseinheiten von kartenähnlichen Dimensionen, was die Verwendung der Umverpackungen beispielsweise als Eintrittskarten, Spielkarten oder Sammelkarten erlaubt aufgrund des hierfür üblichen Formats.

Zweckmäßigerweise sind die Verbindungsbereiche symmetrisch zueinander, bezogen auf die Querachse, ausgebildet. Der Taschenbereich kann eine im Wesentlichen quadratische Form, bezogen auf den Querschnitt in der Ebene der Längsachse und der Querachse, aufweisen. Dann ist die Umverpackung insbesondere zur Aufnahme von kreisrunden Daten-trägern, wie beispielsweise CDs, geeignet.

Ein Hüllbauteil kann im Taschenbereich eine Ausnehmung aufweisen, wobei die Querschnittsfläche der Ausnehmung kleiner als die darunterliegende Flächenausdehnung des Datenträgers ist. Dies erlaubt es, beispielsweise einen Aufdruck des Datenträgers ohne Entnahme des Datenträgers aus der Umverpackung zu erkennen. Dennoch ist der Datenträger in der Umverpackung sicher angeordnet. Gleiches wird erreicht, wenn zumindest ein Hüllbauteil im Taschenbereich ein transparentes Fenster aufweist. Ein solches Fenster ist beispielsweise durch Aufkleben einer transparenten Folie auf das Hüllbauteil mit der Ausnehmung einrichtbar.

Auf einem Hüllbauteil oder einer Lasche kann ein Echtheits- und/oder Sicherheitsmerkmal angebracht sein. Solche Merkmale dienen der Verifizierung der Echtheit des Gegenstandes, auf welchem sie angebracht sind. Dadurch wird eine Verfälschung zumindest erschwert, wenn nicht unmöglich gemacht. Diese empfiehlt sich insbesondere im Falle von Umverpackungen, welche eine Funktion als Wertmarke, beispielsweise als Eintrittskarte, aufweisen und insofern einen selbstständigen Wert darstellen. Als Echtheits- und/oder Sicherheitsmerkmal kommen alle im Bereich der Sicherheits- und Wertdokumente fachüblichen personen- und/oder maschinenlesbaren Merkmale in Frage, wie beispielsweise mikroperforierte Laserimages, Hologramme, Barcodes, Mikrochips und dergleichen.

Zweckmäßigerweise bestehen die Hüllbauteile aus einem Werkstoff aus der Gruppe "Pappe, Papier, Polymer-Werkstoffe, sowie Laminate der vorstehenden Werkstoffe". Insbesondere bei den Werkstoffen Pappe und Papier ist es mit einfachen Mitteln möglich, vollfarbige Bedruckungen aufzubringen.

Die Erfindung betrifft des Weiteren eine Umverpackung für eine erfindungsgemäße Verpackungseinheit, mit zwei flächigen Hüllbauteilen, wobei die Hüllbauteile optional jeweils eine Längsachse und eine Querachse aufweisen mit einem Verhältnis der Längserstreckung zu der Quererstreckung von 1,1:1,0 bis 5:1 aufweisen, und wobei die Hüllbauteile in Verbindungsbereichen, welche, bezogen auf einen Taschenbereich, einander gegenüberliegen, optional an den einander gegenüberliegenden Enden der Längserstreckung angeordnet sind, flächig miteinander, den zwischen den Verbindungsbereichen angeordneten Taschenbereich bildend, verbunden sind.

Die Erfindung betrifft des Weiteren die Verwendung einer erfindungsgemäßen Verpackungseinheit als Eintrittskarte, Spielkarte, Sammelkarte und/oder Tourismuskarte, wobei zumindest eines der Hüllbauteile außenseitig eine Bedruckung, vorzugsweise eine vollfarbige Bedruckung, aufweist. Auch eine Verwendung zur Archivierung ist selbstverständlich möglich.

Die Erfindung lehrt schließlich ein Verfahren zur Herstellung einer erfindungsgemäßen Umverpackung, wobei zwei Hüllbauteile mit deckungsgleichen Verbindungsbereichen aus einem Plattenmaterial ausgeformt, insbesondere ausgestanzt, werden, wobei zumindest jeweils ein Verbindungsbereich der beiden Hüllbauteile mit einer Klebstoffschicht versehen wird, wobei die beiden Hüllbauteile mit zueinander gewandter Klebstoffschicht aneinander gelegt und die einander gegenüberliegenden Verbindungs- bereiche miteinander verklebt werden. Wenn vor dem Verkleben der Verbindungsbereiche auf ein Hüllbauteil im Taschenbereich der Datenträger aufgelegt wird, wird in gleichem Zuge die gesamte Verpackungseinheit hergestellt. Sofern ein Hüllbauteil eine umlegbare und verklebbare (Verschluss-) Lasche aufweist, erfolgt das Umlegen und Verkleben dieser Lasche nach Einbringung des Datenträgers. Es ist auch möglich, eine oder beide einander gegenüberliegende offenen Kanten des Taschenbereiches mittels einer Verschlussfahne zu umkleben.

In einer Ausführungsform der Erfindung von selbstständiger Bedeutung ist eine Teilverpackungseinheit, umfassend den Taschenbereich und jeweils einen Teilbereich jedes Verbindungsbereichs, aus der Verpackungseinheit herausbrechbar. Hierzu ist im Bereich der Umfangslinie der Teilverpackungseinheit beispielsweise eine Perforation angebracht, die das Herausbrechen entlang der Umfangslinie der Teilverpackungseinheit ermöglicht bzw. vereinfacht. In dieser Ausführungsform läßt sich die Verpackungeinheit beispielsweise in einem Poststückformat, beispielsweise Postkartenformat, herstellen. Grundsätzlich gelten dabei die vorstehenden Erläuterungen zur Herstellung analog, wobei die Hüllbauteile jedoch zusätzlich, vor oder nach dem Verbinden der Verbindungsbereiche, mit der Perforation entlang der einzurichtenden Teilverpackungseinheit versehen werden. In dieser Ausführungsform kann die Verpackungseinheit an eine Zielperson übergeben oder versandt werden. Die Zielperson bricht dann die Teilverpackungseinheit aus der Verpackungseinheit heraus und verwendet die Teilverpackungseinheit dann entsprechend den vorstehend angegebenen Verwendungsmöglichkeiten.

Grundsätzlich gelten für die erfindungsgemäße Umverpackung, die Verwendungen sowie das Herstellungsverfahren alle zuvor zur Verpackungseinheit getroffenen Erläuterungen analog.

Im Folgenden wird die Erfindung anhand von lediglich ein Ausführungsbeispiel darstellenden Figuren näher erläutert.
Es zeigen:
- Figur 1:: eine Außenansicht einer erfindungsgemäßen Verpackungseinheit,
- Figur 2:: eine Seitenansicht des Gegenstandes des Anspruchs 1 sowie eine Seitenansicht aus der gegenüberliegenden Richtung,
- Figur 3:: eine Ansicht in Richtung A-A des Gegenstandes der Figur 2,
- Figur 4:: eine Außenansicht einer "geshapten" Ausführungsform,
- Figur 5:: eine Außenansicht einer quadratischen Ausführungsform und
- Figur 6:: eine Außenansicht einer ausbrechbaren Ausführungsform.

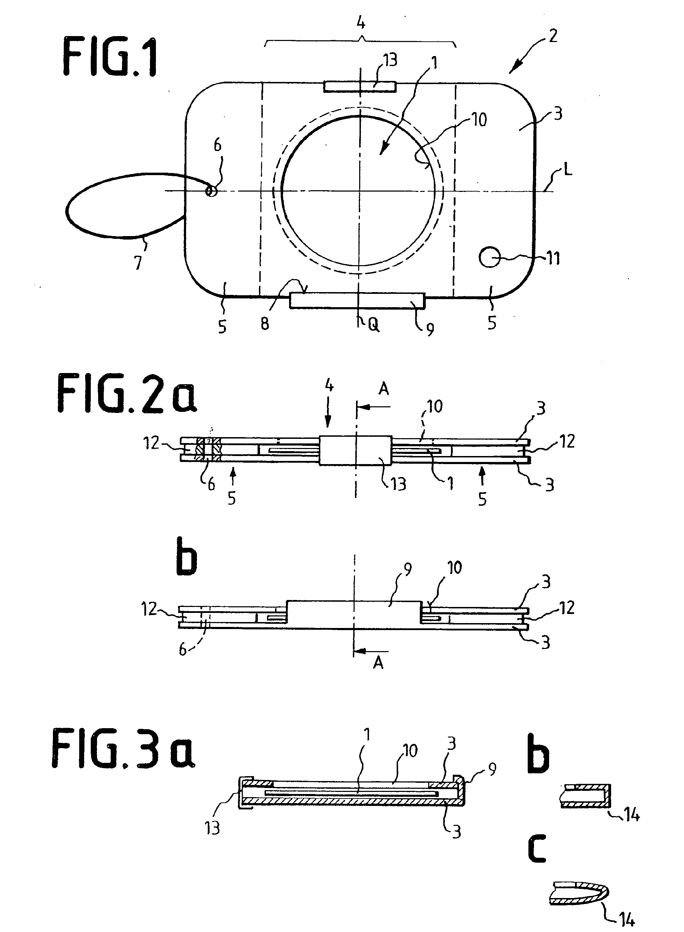

In der Figur 1 erkennt man eine Verpackungseinheit mit einem als CD ausgeführten scheibenförmigen Datenträger 1 sowie eine Umverpackung 2. Durch vergleichende Betrachtung der Figuren 1 bis 3 erkennt man, dass die Umverpackung 2 aus zwei flächigen Hüllbauteilen 3 gebildet ist. Die Hüllbauteile sind aus Pappe ausgeformt. Insbesondere anhand der Figur 1 erkennt man, dass die Hüllbauteile 3 jeweils eine Längsachse L und eine Querachse Q aufweisen, wobei das Verhältnis der Längserstreckung zur Quererstreckung ungleich ist. Hierdurch wird ein Taschenbereich 4 gebildet, an dessen gegenüberliegenden Seiten zwei deckungsgleiche Verbindungsbereiche 5 angeordnet sind. Insbesondere der Figur 2 ist zu entnehmen, dass die Verbindungsbereiche 5 mittels einer Klebstoffschicht 12 miteinander verbunden sind.

Wiederum der Figur 1 entnehmbar ist, dass in einem Verbindungsbereich 5 eine Öse 6 angebracht ist, durch welche ein Band 7 hindurchführbar ist. Einer vergleichenden Betrachtung der Figur 1 sowie der Figur 2b entnimmt man, dass an einer zur Längsachse L parallel verlaufenden Kante 8 eines Hüllbauteils 3 eine Lasche 9 angebracht ist, welche entlang der Kante 8 umlegbar und mit dem gegenüberliegenden Hüllbauteil 3 verklebbar ist. Dies ist auch in weiterer Ansicht der Figur 3 entnehmbar. Bei der Verklebung handelt es sich um eine Adhäsionsverklebung, wodurch die Lasche mehrfach als Verschluss eingesetzt werden kann. Im Ausführungsbeispiel ist die Lasche 9 zusätzlich mit einer der Übersichtlichkeit halber nicht dargestellten Perforation im Bereich der Kante 8 versehen, wodurch sie einfach abtrennbar ist. Somit kann die Verpackungseinheit als Eintrittskarte verwendet werden, wobei durch Abreißen der Lasche 9 eine Entwertung stattfindet.

Insbesondere der Figur 1 entnimmt man wiederum, dass der Taschenbereich 4 im Wesentlichen eine quadratische Form, bezogen auf den Querschnitt in der Ebene der Längsachse L und der Querachse Q, aufweist. Die Verbindungsbereiche 5 sind symmetrisch zueinander, bezogen auf die Querachse Q, angeordnet. Das in der Aufsicht der Figur 1 obenliegende Hüllbauteil 3 weist im Taschenbereich 4 eine Ausnehmung 10 auf, deren Querschnittsfläche kleiner als die Fläche des Datenträgers 1 ist. Auf dem Hüllbauteil 3 ist ein Sicherheitsmerkmal 11 in Form eines mikroperforierten Laserimages angebracht.

Durch vergleichende Betrachtung der Figuren 1, 2a und 3 erkennt man, dass auf der der Lasche 9 gegenüberliegenden Seite des Taschenbereiches 4 eine Verschlussfahne 13 aufgeklebt ist, welche die beiden Hüllbauteile 3 umgreift. Hierdurch wird an dieser Seite ein Herausfallen des Datenträgers 1 vermieden. Alternativ hierzu können die Verbindungsbereiche 5 auf einer Seite der Längsachse L zumindest teilweise an die Form des Datenträgers 1 angepasst sein. Dann kann die Verschlussfahne 13 ersatzlos entfallen.

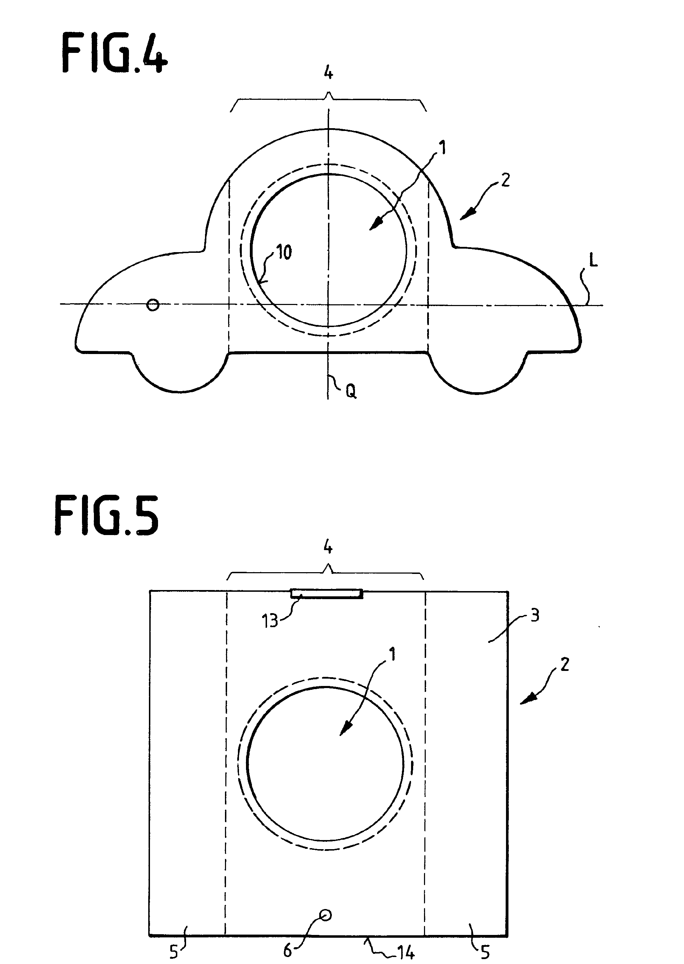

Die Figuren 4 und 5 zeigen eine geshapte sowie eine quadratische Variante. Es gilt das Vorstehende analog.

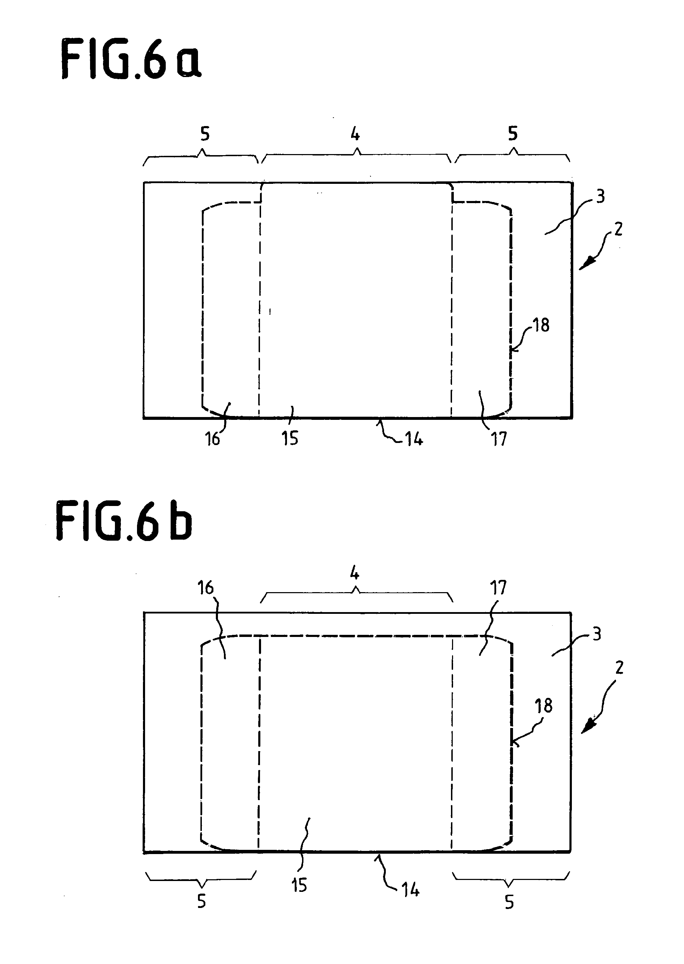

In der Ausführungsform gemäß Figur 6 (die Figuren 6a und 6b zeigen Ansichten von verschiedenen Seiten) ist eine Teilverpackungseinheit (15), umfassend den Taschenbereich (4) und Teilbereiche (16,17) der Verbindungsbereiche, aus der Verpackungseinheit herausbrechbar. Hierzu ist im Bereich der Umfangslinie der Teilverpackungseinheit (15) beispielsweise eine Perforation (18) angebracht, die das Herausbrechen entlang der Umfangslinie der Teilverpackungseinheit (15) ermöglicht bzw. vereinfacht. In dieser Ausfürhungsform sind eine Knickung (14) und eine Lasche (9) vorgesehen. Bezüglich der Lasche (9) ist ersichtlich, dass die Perforationen 18 an beiden Hüllbauteilen 3 unterscheidlich sind, so dass die Lasche an nur einem Hüllbauteil 3 nach dem Herausbrechen verbleibt, wozu auf eine vergleichende Betrachtung der beiden Figuren 6a und 6b verwiesen wird. Es versteht sich, dass die Hüllbauteile 3 sich über die in der Figur 6 dargestellten freistehenden Kante der Lasche (9) hinaus erstrecken kann.

Generell können die beiden Hüllbauteile (3) entlang einer Kante über eine Knickung (14) miteinander verbunden sein. Dann lassen sich die beiden, miteinander verbundenen Hüllbauteile (3) in einer Verfahrenstufe aus einem einzigen Plattenmaterialbogen ausformen. Alternativ oder zusätzlich kann eine fläche Verklebung oder sonstige Verbindung, beispielsweise mittels einer umlegbaren und verklebbaren Lasche (9), einander gegenüberliegender Bereiche der beiden Hüllbauteile (3) in einem weiteren (dritten) Verbindungsbereich erfolgen, so dass die 3 Verbindungsbereiche den Taschenbereich (4) an drei Seiten abschließen.

## Patentansprüche

1. Verpackungseinheit mit einem scheibenförmigen Datenträger (1) sowie einer Umverpackung (2) hierfür, wobei die Umverpackung (2) aus zwei flächigen Hüllbauteilen (3), welche zumindest über einen Teilbereich ihres Umfangrandes miteinander verbunden sind und einen Taschenbereich (4) zur Aufnahme des Datenträgers (1) bilden, aufgebaut ist,
**dadurch gekennzeichnet,**
**dass** die Hüllbauteile (3) in, bezogen auf den Taschenbereich (4), einander gegenüberliegenden Verbindungsbereichen (5), welche ausserhalb des Taschenbereiches (4) angeordnet sind, flächig, optional laschenfrei, miteinander verbunden sind.

2. Verpackungseinheit nach Anspruch 1, **dadurch gekennzeichnet,**
**dass** die Hüllbauteile (3) jeweils eine Längsachse (L) und eine Querachse (Q) aufweisen, wobei das Verhältnis der Längserstreckung zu der Quererstreckung von 1,1 : 1,0 bis 5 : 1 beträgt, und dass die Hüllbauteile (3) in Verbindungsbereichen (5), welche an den einander gegenüberliegenden Enden der Längserstreckung angeordnet sind, flächig miteinander verbunden sind, oder
**dass** die Hüllbauteile (3) eine im wesentlichen quadratische Form aufweisen, wobei der Taschenbereich (4) optional im wesentlichen eine rechteckige Form mit ungleichen Kantenlängen aufweist.

3. Verpackungseinheit nach Anspruch 1 oder 2, **dadurch gekennzeichnet, dass** der Datenträger (1) ein optischer Datenträger, insbesondere eine CD, beispielsweise eine 80 mm CD, oder ein Substitut für einen optischen Datenträger (1) ist.

4. Verpackungseinheit nach einem der Ansprüch 1 bis 3, **dadurch gekennzeichnet, dass** die Verbindungsbereiche (5) miteinander flächig verklebt sind.

5. Verpackungseinheit nach einem der Ansprüche 1 bis 4, **dadurch gekennzeichnet, dass** in oder an einem Verbindungsbereich (5) Mittel (6) zur Befestigung der Umverpackung an einem Aufhängungselement (7) eingerichtet sind.

6. Verpackungseinheit nach einem der Ansprüche 1 bis 5, **dadurch gekennzeichnet, dass** an einer Kante, beispielsweise zur Längachse (L) parallel verlaufenden Kante, (8) zumindest eines Hüllbauteiles (3) eine optional frei stehende Lasche (9) angebracht ist, welche abtrennbar ist.

7. Verpackungseinheit nach einem der Ansprüche 1 bis 5, **dadurch gekennzeichnet, dass** an zumindest einer Kante, beispielsweise einer zur Längachse (L) parallel verlaufenden Kante (8), eines Hüllbauteiles (3) eine Lasche (9) angebracht ist, welche entlang der Kante (8) umlegbar und mit dem gegenüberliegenden Hüllbauteil (3) verbindbar, insbesondere außenseitig des gegenüberliegenden Hüllbauteils (3) verklebbar, ist, wodurch der Taschenbereich mittels der Lasche (9) verschließbar ist.

8. Verpackungseinheit nach einem der Ansprüche 1 bis 7, **dadurch gekennzeichnet, dass** Verhältnis der Längserstreckung zur Quererstreckung 1,1 : 1 bis 2 : 1 beträgt.

9. Verpackungseinheit nach einem der Ansprüche 1 bis 8, **dadurch gekennzeichnet, dass** das Verhältnis der Summe der Flächen der Verbindungsbereiche (5) zur Fläche des Taschenbereiches (4) 1 : 100 bis 2 : 1, insbesondere 1 : 10 bis 1 : 1, beträgt.

10. Verpackungseinheit nach einem der Ansprüche 1 bis 9, **dadurch gekennzeichnet, dass** die Verbindungsbereiche (5) symmetrisch zueinander, bezogen auf eine Mittenachse bzw. die Querachse (Q), ausgebildet sind.

11. Verpackungseinheit nach einem der Ansprüche 1 bis 10, **dadurch gekennzeichnet, dass** der Taschenbereich (4) im wesentlichen eine quadratische Form, bezogen auf den Querschnitt in der Ebene der Längsachse (L) und der Querachse (Q), aufweist.

12. Verpackungseinheit nach einem der Ansprüche 1 bis 11, **dadurch gekennzeichnet, dass** ein Hüllbauteil (3) im Taschenbereich (4) eine Ausnehmung (10) aufweist, deren Querschnittsfläche kleiner als die Fläche des Datenträgers (1) ist.

13. Verpackungseinheit nach einem der Ansprüche 1 bis 12, **dadurch gekennzeichnet, dass** auf einem Hüllbauteil (3) und/oder einer Lasche (9) ein Echtheits- und/oder Sicherheitsmerkmal (11) angebracht ist.

14. Verpackungseinheit nach einem der Ansprüche 1 bis 13, **dadurch gekennzeichnet, dass** die Hüllbauteile (3) aus einem Werkstoff aus der Gruppe bestehend aus "Pappe, Papier, Polymerwerkstoffen, sowie Laminaten der vorstehenden Werkstoffe" gebildet sind.

15. Umverpackung (2) für eine Verpackungseinheit nach einem der Ansprüche 1 bis 14, mit zwei flächigen Hüllbauteilen (3), wobei die Hüllbauteile (3) optional jeweils eine Längsachse (L) und eine Querachse (Q) mit einem Verhältnis der Längserstreckung zu der Quererstreckung von 1,1 : 1,0 bis 5 : 1 aufweist, und wobei die Hüllbauteile (3) in Verbindungsbereichen (5), welche, bezogen auf einen Taschenbereich (4), einander gegenüberliegen, optional an den einander gegenüberliegenden Enden der Längserstreckung angeordnet sind, flächig, optional laschenfrei, miteinander, den zwischen den Verbindungsbereichen (5) angeordneten Taschenbereich (4) bildend, verbunden sind.

16. Verwendung einer Verpackungseinheit nach einem der Ansprüche 1 bis 14 oder einer Umverpackung nach Anspruch 15 als Eintrittskarte, Spielkarte, Sammelkarte, und/oder Tourismuskarte, wobei zumindest eines der Hüllbauteile (3) außenseitig eine Bedruckung, vorzugsweise eine vollfarbige Bedruckung, aufweist.

17. Verfahren zur Herstellung einer Umverpackung (2) nach Anspruch 15, wobei zwei Hüllbauteile (3), optional entlang einer Knickkante miteinander einstückig verbunden, aus einem Plattenmaterial ausgeformt, insbesondere ausgestanzt, werden, wobei zumindest jeweils ein Verbindungsbereich (5) der beiden Hüllbauteile (3) mit einer Klebstoffschicht versehen wird, wobei die beiden Hüllbauteile (3) mit zueinander gewandter Klebstoffschicht aneinandergelegt und die einander gegenüberliegenden Verbindungsbereiche (5) miteinander verklebt werden.
